# EUROPÄISCHE PATENTSCHRIFT

(11) **EP 0 491 222 B1**
(45) Veröffentlichungstag und Bekanntmachung des Hinweises auf die Patenterteilung: **17.05.1995**
(21) Anmeldenummer: 91120722.3
(22) Anmeldetag: 03.12.1991
(51) Int. Cl.: F16C 3/10, F16C 3/22, F16D 1/08, F04C 18/02

(54) **Exzenterwelle**
Excentric shaft
Arbre excentrique

(30) Priorität: 19.12.1990 DE 4040623
(43) Veröffentlichungstag der Anmeldung: 24.06.1992
(73) Patentinhaber: Volkswagen Aktiengesellschaft, 38436 Wolfsburg (DE)
(72) Erfinder: Schäfer, Otto, W-3180 Wolfsburg 1 (DE); Müller, Claus, W-3180 Wolfsburg 11 (DE)

(56) Entgegenhaltungen:
- EP-A- 0 371 305
- DE-A- 3 839 253
- DE-U- 8 109 063
- GB-A- 135 582
- US-A- 1 783 825
- US-A- 1 845 110
- US-A- 2 364 109

## Beschreibung

Die Erfindung betrifft eine Exzenterwelle. Es wird Bezug genommen auf den jeweiligen Oberbegriff der unabhängigen Patentansprüche. Eine Exzenterwelle zum Antrieb eines exzentrisch kreisenden Bauteils, etwa eines Verdrängers in einer Spiralverdrängermaschine gemäß der Motortechnischen Zeitschrift MTZ 46 (1985) 323-327, weist einen zwischen zwei Wellenzapfen angeordneten Exzenter auf. Einer der Wellenzapfen trägt ein Drehwinkelübertragungsglied in Gestalt eines Zahnriemenrades zur Übertragung der Exzenterwellendrehung auf eine weitere, ebenfalls exzentrische Nebenwelle. Beide Wellen müssen bezüglich ihrer Winkellagen mit größtmöglicher Genauigkeit aufeinander abgestimmt sein. Wichtige Voraussetzung hierfür ist eine genau definierte Positionierung des Drehwinkelübertragungsgliedes auf dem Wellenzapfen relativ zur Lage des Exzenters. Bekannt ist eine Feder-Nut-Verbindung zwischen den Wellenzapfen und dem Drehwinkelübertragungsglied. Diese Art der Verbindung erfüllt nicht die hohen Anforderungen an die Genauigkeit, weil beim Einsetzen der Feder in die Nut und im laufenden Betrieb Abweichungen von den vorgegebenen Sollmaßen auftreten, etwa durch zu großes Spiel oder durch erforderliches Nacharbeiten an der Nut bzw. an der Feder. Für den beschriebenen Anwendungsfall, bei dem auch die mittels der Exzenterwelle angetriebene Nebenwelle exzentrisch ausgebildet ist, ergibt sich hierdurch eine besonders ungünstige Addition der Fehlertoleranzen

Außerdem ist aus der EP-A1 0371 305 eine Exzenterwelle mit einem Gegengewicht bekannt geworden, welches als separates Teil formschlüssig auf einem Wellensitz angeordnet ist, der einen durch zwei Kreisbögen begrenzten Querschnitt aufweist. Der eine, dem Exzenter diametral gegenüberliegende Kreisbogen hat sein Zentrum auf der Exzenterachse, während der andere Kreisbogen sein Zentrum auf der Rotationsachse der Welle hat.

Aufgabe der vorliegenden Erfindung ist es, eine gattungsgemäße Exzenterwelle derart weiterzubilden, daß einerseits das Ausgleichsgewicht auf der Welle winkelgenauer als bisher positionierbar ist und zudem das Widerstandsmoment der Exzenterwelle gegenüber solchen nach dem Stand der Technik erhöhbar ist.

Erfindungsgemäß wird die Aufgabe durch die kennzeichnenden Merkmale des Patentanspruchs 1 gelöst. Danach ist vorgesehen, daß der das Ausgleichsgewicht tragende Wellenzapfen an seinem Umfang zumindest eine planparallele Fläche aufweist, die an einer korrespondierenden Fläche am Ausgleichsgewicht anliegt. Die planparallele Fläche dient zur besonders winkelgenauen Positionierung des Ausgleichsgewichts. Außerdem ist zur weiteren Erhöhung des Widerstandsmoments an einem durch einen Absatz gebildeten Übergang vom Exzenter zum Wellenzapfen eine Verstärkungsrippe vorgesehen. Diese kann auch unabhängig von einer planparallelen Fläche am Wellenzapfen angeordnet sein.

Vorteilhafterweise wirkt die Verstärkungsrippe mit einer korrespondierenden Nut am Ausgleichsgewicht zusammen und sichert so eine winkelgenaue Fixierung des Ausgleichsgewichts auf dem Wellenzapfen.

In Fortbildung der Erfindung ist vorgesehen, daß der Wellenzapfen im Bereich des Ausgleichsgewichts einen im wesentlichen rechteckigen Querschnitt aufweist. Dadurch wird zugleich eine Vergrößerung des einer Wellendurchbiegung entgegenwirkenden Widerstandsmoments bewirkt. Ein herkömmlicher, im Vergleich zur Erfindung runder Wellenzapfen ist bezüglich des Widerstandsmoments bei einem der Kantenlänge des Rechteckquerschnitts entsprechenden Durchmesser unterlegen. Eine geringfügige Rundung der Querschnittsecken ist dabei unschädlich. Eine Vergrößerung des runden Querschnitts kommt nicht in betracht, da, wie oben bereits aufgeführt, der Wellenzapfenquerschnitt nicht über den Querschnitt des Exzenters herausstehen darf.

Anspruch 3 betrifft eine spezielle vorteilhafte Gestaltung des Querschnitts in Anlehnung an die Exzenterkontur.

Ausführungsformen der Erfindung werden im folgenden anhand von Zeichnungen näher erläutert. Es zeigen:
- Figur 1: einen Schnitt durch eine Spiralverdrängermaschine mit erfindungsgemäßen Exzenterwellen,
- Figur 2: eine erfindungsgemäße Gestaltung eines Wellenzapfens einer exzentrischen Nebenwelle gemäß Figur 1 im axialen Querschnitt.
- Figur 3: eine erfindungsgemäße Gestaltung eines Wellenzapfens einer exzentrischen Antriebswelle gemäß Figur 1 im axialen Querschnitt.
- Figur 4: eine Seitenansicht der beiden über einen Zahnriementrieb miteinander verbundenen Exzenterwellen gemäß den Figuren 1,2 und 3,
- Fig. 5+6: eine andere Ausführungsform der Wellenzapfen gemäß den Figuren 2 und 3,
- Figur 7: eine Seitenansicht einer erfindungsgemäßen Exzenterwelle mit aufsteckbarem Ausgleichsgewicht,
- Figur 8: einen Querschnitt durch einen Wellenzapfen mit Ausgleichsgewicht gemäß Figur 7,
- Figur 9: einen Querschnitt durch eine andere Ausführungsform gemäß Figur 8,
- Figur 10: eine Seitenansicht einer weiteren erfindungsgemäßen Exzenterwelle mit aufsteckbarem Ausgleichsgewicht und
- Figur 11: einen Querschnitt durch einen Wellenzapfen mit Ausgleichsgewicht gemäß Figur 10.

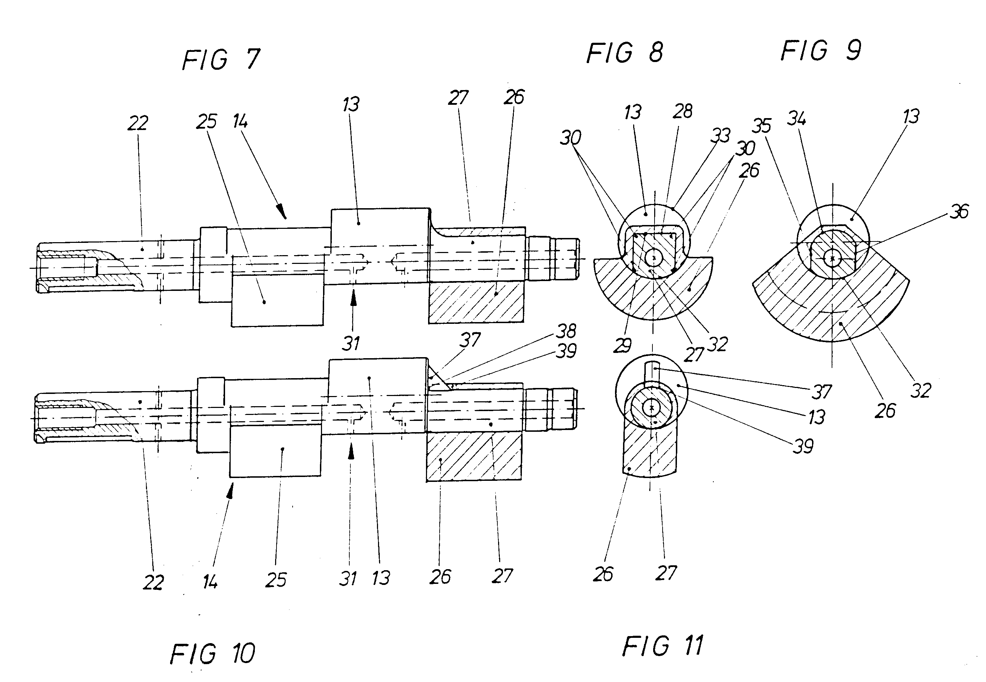

Nur die Figuren 10 und 11 zeigen den Gegenstand nach Anspruch 4 vollständig. Die übrigen Figuren stellen die Gegenstände der Ansprüche 1 u. 4 aufgrund der fehlenden Rippe (37) nicht vollständig der, sondern zeigen nur einzelne Merkmale.

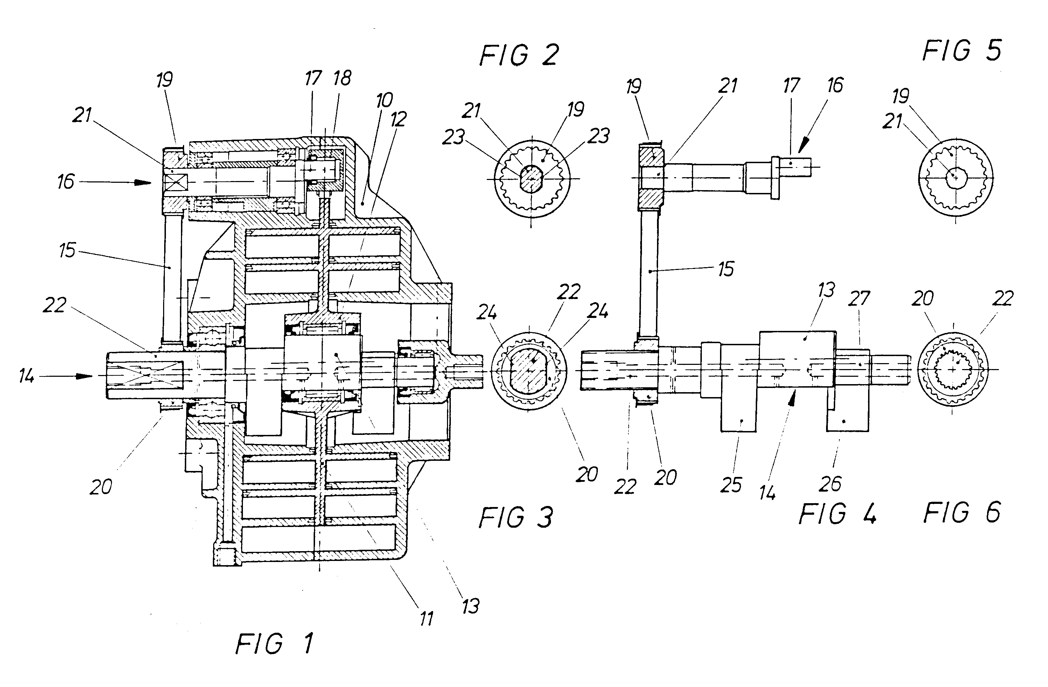

Die Schnittansicht in Figur 1 zeigt eine Spiralverdrängermaschine, auch Spirallader oder G-Lader genannt, mit einem in einem Gehäuse 10 exzentrisch kreisenden Verdränger 11. Aufbau und Wirkungsweise des Spiralladers entsprechen im Wesentlichen den in der oben genannten MTZ beschriebenen. Der Spirallader wird insbesondere zur Aufladung von Brennkraftmaschinen in Kraftfahrzeugen verwendet.

Der Verdränger 11 sitzt mit einer Nabe 12 auf einem Exzenter 13 einer Antriebswelle 14. Diese ist über einen Zahnriementrieb 15 mit einer ebenfalls exzentrischen Führungswelle 16 wirkverbunden. Letztere greift mit einem Exzenterzapfen 17 in ein entsprechendes Lagerauge 18 im Verdränger 11 und führt so die Verdrängerbewegung. Die beiden Wellen 14 und 16 werden auch als Exzenterwellen bezeichnet.

Zur Bewegungsübertragung durch den Zahnriementrieb 15 sind weiterhin Zahnriemenräder 19 und 20 als Drehwinkelübertragungsglieder an freistehenden Wellenzapfen 21,22 der Führungswelle 16 bzw. der Antriebswelle 14 vorgesehen. Für einen verschleißarmen Betrieb ist eine besonders genaue Abstimmung der beiden Exzenterwellen 14,16 erforderlich. Die Zahnriemenräder 19,20 müssen deshalb eine äußerst winkelgenaue Positionierung relativ zum Exzenter 13 bzw. zum Exzenterzapfen 17 aufweisen. Zur Sicherstellung derselben sind die Wellenzapfen 21,22 an ihrem Umfang zur Ausbildung planparalleler Flächen 23,24 zumindest Abschnittsweise abgeflacht. Die Zahnriemenräder 19,20 weisen eine dementsprechende Innenkontur auf, so daß sich hier ein formschlüssiger, spielfreier Sitz ergibt. Die planparallelen Flächen 23,24 sind besonders gut in den Figuren 2 und 3 erkennbar. Die Figur 4 zeigt eine Ansicht gemäß Figur 1, jedoch ohne Verdränger 11 und Gehäuse 10. Neben dem Exzenter 13 sind auf der Antriebswelle 14 links und rechts Ausgleichsgewichte 25 und 26 erkennbar. Auf diese wird weiter unten im Zusammenhang mit den Figuren 7-11 näher eingegangen. Die Figuren 5 und 6 zeigen eine andere Ausführungsform der Verbindung zwischen den Zahnriemenrädern 19,20 und den Wellenzapfen 21,22. Es sind hier keine planparallelen Flächen vorgesehen. Vielmehr sind die Wellenzapfen 21,22 außen verzahnt, während die Zahnriemenräder 19,20 eine korrespondierende Innenverzahnung aufweisen.

Die Fertigung der Exzenterwelle 14 erfolgt mit genauer Abstimmung zwischen der Lage des oberen Totpunkts des Exzenters 13 relativ zur Position des Zahnriemenrades 20 auf dem Wellenzapfen 22. Analog gilt dies für die Führungswelle 16. Bei der Fertigung der Antriebswelle 14 werden zunächst die planparallelen Flächen 24, ggf. auch nur eine, herausgearbeitet. Diese Fläche 24 wird sodann als Anlage für eine Bearbeitung des Exzenters 13 genutzt. Speziell in diesem Verfahren erfolgt vor der Bearbeitung des Exzenters 13 eine Härtung der Welle 14.

Die Figuren 7-11 zeigen besondere Ausführungsformen der erfindungsgemäßen Antriebswelle 14. Dabei geht es um eine besondere Gestaltung des Wellenzapfens 27 rechts vom Exzenter 13. Auf dem Wellenzapfen 27 ist das Ausgleichsgewicht 26 angeordnet. Dieses ist steckbar, weil bei der Montage der Spiralverdrängermaschine zunächst der Verdränger 11 mit seiner Nabe 12 auf den Exzenter 13 aufgeschoben wird. Der Wellenzapfen 27 darf deshalb in seinem Durchmesser nicht über den Durchmesser des Exzenters hinausragen. Entsprechend ist das Ausgleichsgewicht 26 nicht integraler Bestandteil der Exzenterwelle 14 sondern, wie gesagt, aufsteckbar. Es ist jedoch auch an dieser Stelle eine besonders hohe Genauigkeit der Position des Exzenters 13 zum Ausgleichsgewicht 26 erforderlich. Zu diesem Zweck ist, wie zuvor im Zusammenhang mit dem Wellenzapfen 22 beschrieben, mindestens eine planparallele Fläche 28 am Wellenzapfen 27 vorgesehen. Diese kommt an einer damit korrespondierenden Fläche 29 im Ausgleichsgewicht 26 zur Anlage. Die Fläche 28 wird entweder in Abhängigkeit von der Fläche 24 am gegenüberliegenden Wellenzapfen 22 oder aber in Abhängigkeit von der Relativposition des Exzenters 13 herausgearbeitet. Höchste Winkelgenauigkeit ist dadurch gewährleistet. Gemäß Figur 8 weist der Wellenzapfen 27 einen insgesamt nahezu rechteckigen Querschnitt auf. Gegenüber einem runden Querschnitt, wie er z.B. der Figur 11 entnehmbar ist, ergibt sich ein deutlicher Zuwachs des Widerstandsmoments, insbesondere durch das zusätzliche Material in den Ecken 30 des Querschnitts. Eine durch auftretende Zentrifugalkräfte - Pfeil 31 - auftretende Wellendurchbiegung wird so wirksam verringert. Zur größtmöglichen Raumausnutzung ist eine untere Seite 32 des Wellenzapfenquerschnitts in Fortsetzung der Exzenterkontur bzw. mit dieser deckungsgleich ausgebildet, vergleiche Figur 8. Weitere nahezu rechteckige Formen sind möglich. Zur Erhöhung des Widerstandsmoments ist es sinnvoll, eine Hauptachse des rechteckigen Querschnitts parallel zur wirksamen Zentrifugalkraft 31 auszurichten.

Figur 9 zeigt eine gegenüber der Figur 8 geänderte Ausführungsform. Im Gegensatz zur Figur 8 ist hier die der Unterseite 32 des Querschnitts gegenüberliegende Oberseite 34 nicht abgeflacht, sondern gerundet ausgebildet. Analog zu Figur 8 sind die Seiten 35,36 des Wellenzapfenquerschnitts abgeflacht.

Die Figuren 10 und 11 betreffen eine weitere Ausführungsform der Antriebswelle 14. Hier ist vorgesehen, daß das Ausgleichsgewicht 26 durch eine Rippe 37 an einem durch einen Absatz 38 gebildeten Übergang in seiner gewünschten Position fixiert wird. Zu diesem Zweck weist das Ausgleichsgewicht 26 an seinem äußeren Umfang und nahe dem Exzenter 13 einen Schlitz 39 auf, in dem die Rippe 37 formschlüssig eingreift. Der Querschnitt des Wellenzapfens 27 ist gemäß Figur 11 rund ausgebildet. Die Rippe 37 bewirkt in dieser Ausführungsform sowohl die bereits genannte Fixierung des Ausgleichsgewichts 26, als auch eine Erhöhung des Widerstandsmoments im Bereich Exzenter 13 - Wellenzapfen 27.

In einer nicht gezeigten Ausführungsform ist die Rippe 37 in Verbindung mit einem rechteckigen Wellenzapfenquerschnitt gemäß den Figuren 8 und 9 vorgesehen. Dadurch ergibt sich eine höchstmögliche Steigerung des Widerstandsmoments in Verbindung mit einer größtmöglichen Winkelgenauigkeit des Ausgleichsgewichts relativ zum Exzenter 13.

### BEZUGSZEICHENLISTE

- 10: Gehäuse
- 11: Verdränger
- 12: Nabe
- 13: Exzenter
- 14: Antriebswelle
- 15: Zahnriementrieb
- 16: Führungswelle
- 17: Exzenterzapfen
- 18: Lagerauge
- 19: Zahnriemenrad
- 20: Zahnriemenrad
- 21: Wellenzapfen
- 22: Wellenzapfen
- 23: planparallele Fläche
- 24: planparallele Fläche
- 25: Ausgleichsgewicht
- 26: Ausgleichsgewicht
- 27: Wellenzapfen
- 28: planparallele Fläche
- 29: planparallele Fläche
- 30: Ecken
- 31: Zentrifugalkraft
- 32: Unterseite des Querschnitts
- 33: Exzenterkontur
- 34: Oberseite
- 35: Seite
- 36: Seite
- 37: Rippe
- 38: Absatz
- 39: Schlitz

## Patentansprüche

1. Exzenterwelle (14) mit einem Exzenter (13) und beidseitig hiervon angeordneten Ausgleichsmassen (25, 26), wobei mindestens eine der Ausgleichsmassen als auf einen Wellenzapfen (27) aufsteckbares Ausgleichsgewicht (26) ausgebildet ist, dadurch gekennzeichnet, daß der Wellenzapfen (27) an seinem Umfang zumindest eine planparallele Fläche (28) aufweist, die an einer korrespondierenden Fläche (29) am Ausgleichsgewicht (26) anliegt, und daß an einem durch einen Absatz (38) gebildeten Übergang vom Exzenter (13) zum Wellenzapfen (27) eine Rippe (37) vorgesehen ist.

2. Exzenterwelle nach Anspruch 1, dadurch gekennzeichnet, daß der Wellenzapfen (27) im Bereich des Ausgleichsgewichts (26) einen im wesentlichen rechteckigen Querschnitt aufweist.

3. Exzenterwelle nach Anspruch 1 oder 2, dadurch gekennzeichnet, daß eine Seite des Querschnitts (Unterseite 32) in Fortsetzung der Exzenterkontur (33) ausgebildet ist.

4. Exzenterwelle (14) mit einem Exzenter (13) und beidseitig hiervon angeordneten Ausgleichsmassen (25, 26), wobei mindestens eine der Ausgleichsmassen als auf einen Wellenzapfen (27) aufsteckbares Ausgleichsgewicht (26) ausgebildet ist, dadurch gekennzeichnet, daß an einem durch einen Absatz (38) gebildeten Übergang vom Exzenter (13) zum Wellenzapfen (27) eine axialgerichtete Rippe (37) vorgesehen ist.

5. Exzenterwelle nach Anspruch 1 oder 4, dadurch gekennzeichnet, daß die Rippe (37) mit einer korrespondierenden Nut (Schlitz 39) am Ausgleichsgewicht (26) zusammenwirkt und so eine winkelgenaue Fixierung des Ausgleichsgewichts (26) auf dem Wellenzapfen (27) sichert.

## Claims

1. An eccentric shaft (14) having a cam (13) and compensating masses (25, 26) disposed on either side thereof, wherein at least one of the compensating masses is formed as compensating weight (26) which can be placed on a journal (27), characterised in that the journal (27) comprises on its circumference at least one plane-parallel surface (28) which on a corresponding surface (29) lies against the compensating weight (26), and that at a transition, formed by a shoulder (38), from the cam (13) to the journal (27), a rib (37) is provided.

2. An eccentric shaft according to claim 1, characterised in that the journal (27) in the region of the compensating weight (26) comprises a substantially rectangular cross-section.

3. An eccentric shaft according to claim 1 or 2, characterised in that one side of the cross-section (lower side 32) is formed as a continuation of the cam contour (33).

4. An eccentric shaft (14) having a cam (13) and compensating masses (25, 26) disposed on either side thereof, wherein at least one of the compensating masses is formed as a compensating weight (26) which can be placed on a journal (27), characterised in that at a transition, formed by a shoulder (38), from the cam (13) to the journal (27), an axially directed rib (37) is provided.

5. An eccentric shaft according to claim 1 or 4, characterised in that the rib (37) cooperates with a corresponding groove (slot 39) on the compensating weight (26) and so ensures an angularly precise fixing of the compensating weight (26) on the journal (27).

## Revendications

1. Arbre à excentrique (14) comprenant un excentrique (13) et des masses d'équilibrage (25, 26) disposées des deux côtés de ce dernier, au moins l'une des masses d'équilibrage formant un poids d'équilibrage (26) s'enfilant sur un bout d'arbre (27), caractérisé en ce que le bout d'arbre (27) comporte à sa circonférence au moins une surface plane parallèle (28) qui est en appui contre une surface correspondante (29) du poids d'équilibrage (26) et en ce qu'une nervure (37) est prévue à une transition de l'excentrique (13) au bout d'arbre (27) qui est formée par un décrochement (38).

2. Arbre à excentrique selon la revendication 1, caractérisé en ce que le bout d'arbre (27) présente une section sensiblement rectangulaire dans la zone du poids d'équilibrage (26).

3. Arbre à excentrique selon la revendication 1 ou 2, caractérisé en ce qu'un côté de la section (côté inférieur 32) est conformé en prolongement du contour (33) de l'excentrique.

4. Arbre à excentrique (14) comprenant un excentrique (13) et des masses d'équilibrage (25, 26) disposées de part et d'autre de ce dernier, au moins l'une des masses d'équilibrage formant un poids d'équilibrage (26) s'enfilant sur un bout d'arbre (27), caractérisé en ce qu'une nervure (37) orientée axialement est prévue à une transition de l'excentrique (13) au bout d'arbre (27) qui est formée par un décrochement (38).

5. Arbre à excentrique selon la revendication 1 ou 4, caractérisé en ce que la nervure (37) coopère avec une rainure correspondante (fente 39) du poids d'équilibrage (26) et assure ainsi un positionnement angulaire précis du poids d'équilibrage (26) sur le bout d'arbre (27).
